# EUROPÄISCHE PATENTSCHRIFT

(11) **EP 2 102 953 B1**
(45) Veröffentlichungstag und Bekanntmachung des Hinweises auf die Patenterteilung: **19.03.2014**
(21) Anmeldenummer: 06846953.5
(22) Anmeldetag: 21.12.2006
(51) Int. Cl.: H02B 1/16

(54) **ERDUNGSVORRICHTUNG ZUM ERDEN VON IN EINER REIHE AUFGESTELLTEN ELEKTRISCHEN BAUTEILEN**
EARTHING DEVICE FOR EARTHING ELECTRICAL COMPONENTS INSTALLED IN A CHAIN
DISPOSITIF DE MISE A LA TERRE POUR LA MISE A LA TERRE DE COMPOSANTS ELECTRIQUES DISPOSES SUR UNE RANGEE

(43) Veröffentlichungstag der Anmeldung: 23.09.2009
(73) Patentinhaber: Siemens Aktiengesellschaft, 80333 München (DE)
(72) Erfinder: DORN, Jörg, 96155 Buttenheim (DE); HAFERMAAS, Jörg, 91056 Erlangen (DE); HOLWEG, Johann, 90513 Zirndorf (DE); KÜBEL, Thomas, 91054 Erlangen (DE); MÜLLER, Herbert, 90489 Nürnberg (DE)
(86) Internationale Anmeldenummer: PCT/DE2006/002323
(87) Internationale Veröffentlichungsnummer: WO 2008/074275

(56) Entgegenhaltungen:
- DE-A1- 3 224 938
- DE-U- 7 400 320
- US-A1- 2006 124 599

## Beschreibung

Die Erfindung betrifft eine Vorrichtung zum Erden von in einer Reihe hintereinander aufgestellten elektrischen Bauteilen mit einem auf Erdpotenzial liegenden Erdungspunkt und einem mit dem Erdungspunkt verbundenen Betätigungsmittel zum Verbinden der elektrischen Bauteile mit dem Erdungspunkt. Das Betätigungsmittel ist als ein sich in eine Längsrichtung erstreckendes und in Längsrichtung bewegliches Bewegteil ausgebildet, wobei das Bewegteil einen mit dem Erdungspunkt verbundenen elektrisch leitenden Erdungsabschnitt und einen elektrisch nicht leitenden Isolierabschnitt aufweist, der an dem vom Erdungspunkt abgewandten Ende des Bewegteils angeordnet ist, wobei zum Erden der Bauteile eine elektrische Verbindung zwischen dem Erdungsabschnitt und den Bauteilen durch Bewegung des Bewegteils herstellbar ist.

Die Erfindung betrifft ferner einen Stromrichter zum Umrichten eines elektrischen Stromes mit Phasenmodulen, die wenigstens einen Gleichspannungsanschluss und einen Wechselspannungsanschluss aufweisen, wobei zwischen jedem Gleichspannungsanschluss und dem Wechselspannungsanschluss Phasenmodulzweige ausgebildet sind, die eine Reihenschaltung von Submodulen aufweisen, wobei jedes Submodul über ein Gehäuse als elektrisches Bauteil verfügt, in dem wenigstens ein Leistungshalbleiter angeordnet ist.

Eine solche Vorrichtung und ein solcher Stromrichter sind aus dem landläufigen Stand der Technik bereits bekannt. Stromrichter, die aus einer Reihenschaltung aus Submodulen bestehen, sind ebenfalls ausführlich beschrieben worden. Solche Stromrichter können beispielsweise in der Energieübertragung und -verteilung eingesetzt werden. Bei der Hochspannungsgleichstromübertragung sind zwei Stromrichter gleichspannungsseitig miteinander verbunden, wobei jeder Stromrichter an ein Wechselspannungsnetz angeschlossen ist. Dabei verfügt jeder Stromrichter über Phasenmodule, deren Anzahl der Anzahl der Phasen des jeweils angeschlossenen Wechselspannungsnetzes entspricht. Jedes Phasenmodul weist daher einen Wechselspannungsanschluss zum Anschluss der jeweiligen Phase des Wechselspannungsnetzes sowie einen Gleichspannungsanschluss auf. Zwischen dem Wechselspannungsanschluss und jedem Gleichspannungsanschluss erstreckt sich ein Phasenmodulzweig, der aus einer Reihenschaltung von Submodulen besteht. Jedes Submodul verfügt über wenigstens einen Leistungshalbleiter, der in Parallelschaltung zu einer gegensinnig ausgerichteten Freilaufdiode angeordnet ist.

Im Wartungsfall müssen die elektrischen Bauteile des Stromrichters, beispielsweise die Gehäuse der Submodule, geerdet werden. Hierzu dient üblicherweise ein von Hand bedienbarer Kontaktstab oder ein an die Außenseite des Gehäuses des Submoduls verfahrbarer Kamm, wobei der Kontaktstab oder der Kamm jeweils einen Erdungspunkt aufweisen. Die Erdung der Submodule von Hand erfordert jedoch einen hohen Zeitaufwand. Darüber hinaus besteht ein beträchtliches Gefahrenpotenzial für das Wartungspersonal, das die Erdung durchführt. Ferner ist das Gehäuse während der Wartungsarbeiten nicht fortwährend geerdet, so dass ein Wiederaufladen des Gehäuses aufgrund einer Fehlfunktion des gesamten Submoduls nicht ausgeschlossen werden kann.

Die DE 74 00 320 U offenbart eine gattungsgemäße Erdungsvorrichtung für in Reihe angeordnete Stromschienen. Die Erdungsvorrichtung umfasst eine leitende Kurzschließschiene, die mit einem Erdungsseil ausgestattet ist, sowie einen aus Isolierstoff bestehenden Griff. Die Erdungsvorrichtung wird zum Erden der Stromschienen manuell in hintereinander fluchtend an den Stromschienen befestigte Festpunktkontakte hineingeschoben.

In der US 2006/0124599 A1 ist ferner ein Erdungsschalter beschrieben. Der Erdungsschalter weist einen bewegbaren isolierten Griff sowie ein damit starr verbundenes, bewegbares Kontakt-stück auf. Beim Herunterdrücken des Griffs wird das Kontaktstück ebenfalls bewegt und kann mit einem Festkontaktstück eines elektrischen Leiters in Kontakt gebracht werden. Dabei wird der elektrische Leiter über das Kontaktstück, eine fest mit dem Kontaktstück verbundene leitende Scheibe sowie einen leitend ausgebildeten Federkörper mit einem Erdungsanschluss verbunden.

Eine weitere Erdungsvorrichtung ist in der DE 32 24 938 A1 offenbart.

Aufgabe der Erfindung ist es daher eine Vorrichtung der eingangs genannten Art bereitzustellen, mit der eine einfache, gefahrlose und fortwährende Erdung bereitgestellt ist.

Die Erfindung löst diese Aufgabe dadurch, dass in einer Betriebsstellung der Vorrichtung der Isooierabschnitt an den Bauteilen anliegt, so dass die Bauteile nicht geerdet sind. Erfindungsgemäß ist eine einfache Erdung von hintereinander aufgereihten elektrischen Bauteilen bereitgestellt. Die elektrischen Bauteile sind beispielsweise die Gehäuse eines Submoduls eines Stromrichters. Im Normalbetrieb des Stromrichters liegt das Betätigungsteil mit seinem Isolierabschnitt an den elektrischen Bauteilen oder Gehäusen an, wobei der Isolierabschnitt eine den jeweiligen Anforderungen entsprechende Isolierfestigkeit aufweist. Demnach ist die Isolierfestigkeit oder mit anderen Worten die Spannungsfestigkeit des Isolierabschnittes an die jeweils herrschenden Hochspannungen angepasst. So ist die Isolierfestigkeit erfindungsgemäß bei höheren Spannungen ebenfalls.höher ausgebildet, um Kriechströme, Teilentladungen oder dergleichen sicher zu vermeiden. Zum Erden wird das Bewegteil in Längsrichtung verfahren, so dass der metallisch leitende Erdungsabschnitt in Kontakt mit den Gehäusen der Stromrichtermodule gerät. Die Gehäuse liegen dann auf Erdpotenzial, so dass ein gefahrenfreies Berühren bei Wartungsarbeiten ermöglicht ist.

Das Bewegteil umfasst beispielsweise eine Kupferschiene, an die ein Isolierabschnitt angefügt oder angeformt ist. Die Kupferschiene ist beispielsweise über eine Kabelverbindung und einen Rollenkontakt, einen Bandleiter oder auf eine sonstige Art und Weise mit einem Erdungspunkt elektrisch verbunden, so dass dem Bewegteil eine Bewegung in Längsrichtung ermöglicht ist.

Gemäß einer vorteilhaften Weiterentwicklung der Erfindung ist das Bewegteil jedoch ein flexibler und wickelbarer Bewegungsstrang. Der Bewegungsstrang weist eine ausreichende Zugfestigkeit auf, so dass dieser durch Einleiten einer Zugkraft relativ zu den elektrischen Bauteilen bewegt werden kann. Aufgrund der Wickelbarkeit des Stranges ist die Vorrichtung kompakter.

Gemäß einer diesbezüglich zweckmäßigen Weiterentwicklung ist der Bewegungsstrang ein Seil, das an einer Seite den Erdungsabschnitt und an seiner anderen Seite den Isolierabschnitt ausbildet. Der Erdungsabschnitt ist beispielsweise als Drahtseil ausgestattet, das mit einem nicht leitenden Kunststoffseil als Isolierabschnitt verbunden ist.

Gemäß einer hiervon abweichenden Ausgestaltung ist der Bewegungsstrang eine Kette, die in ihrem Erdungsabschnitt metallische, also elektrisch leitende Kettenglieder, in ihrem Isolierabschnitt jedoch Kettenglieder aus einem nicht leitenden Material, wie beispielsweise einem isolierenden Kunststoff, aufweist. Der Isolierabschnitt kann auch seilförmig ausgebildet sein, wobei der Erdungsabschnitt eine Kette ist.

Gemäß einer weiteren Ausgestaltung der Erfindung ist der Bewegungsstrang bandförmig ausgebildet.

Weiterhin ist es zweckmäßig, dass eine erste Wicklung vorgesehen ist, die zum Tragen des Bewegungsstranges vorgesehen ist. Durch die Wicklung wird die erfindungsgemäße Vorrichtung einfach handhabbar und ist darüber hinaus wenig raumgreifend.

Gemäß einer diesbezüglich zweckmäßigen Weiterentwicklung ist eine zweite Wicklung vorgesehen, wobei die elektrischen Bauteile zwischen der ersten Wicklung und der zweiten Wicklung angeordnet sind. Dabei sind die Wicklungen und der Bewegungsstrang so angeordnet, dass sich der Bewegungsstrang oberhalb der elektrischen Bauteile erstreckt. Während des Betriebs liegt der Isolierabschnitt beispielsweise auf den elektrischen Bauteilen auf. Bei Wartungsarbeiten wird die Energieversorgung für die elektrischen Bauteile wie Kondensatoren oder dergleichen oder für die in den elektrischen Bauteilen aufgenommenen elektrischen Komponenten unterbrochen. Zum anschließenden Erden wird die zweite Wicklung von Hand oder mittels eines Elektroantriebes gedreht. Der Isolierabschnitt ist an der zweiten Wicklung befestigt, so dass zunächst dieser auf der zweiten Wicklung aufgewickelt wird. Der elektrisch leitende Erdungsabschnitt wird hingegen allmählich von der ersten Wicklung abgewickelt und erstreckt sich schließlich oberhalb der elektrischen Bauteile. So kommt es beispielsweise aufgrund des Eigengewichts des Erdungsabschnittes zum Kontakt zwischen den elektrischen Bauteilen und dem Erdungsabschnitt. Erfindungsgemäß sind somit sämtliche elektrischen Bauteile gleichzeitig geerdet, wobei die Erdung auch während der Wartungsarbeiten aufrechterhalten bleibt.

Gemäß einer diesbezüglich zweckmäßigen Weiterentwicklung weisen die elektrischen Bauteile Schleifkontakte auf. Gemäß einer diesbezüglich zweckmäßigen Variante weisen die elektrischen Bauteile hingegen Rollenkontakte auf. Durch die Schleifkontakte beziehungsweise Rollenkontakte ist die Kontaktierung zwischen dem.Bewegteil und den elektrischen Bauteilen verbessert. Die Variante der Erfindung, in der das Eigengewicht des Erdungsabschnittes für den.notwendigen Kontakt sorgt, ist selbstverständlich kostengünstiger.

Weitere zweckmäßige Ausgestaltungen und Vorteile der Erfindung sind Gegenstand der nachfolgenden Beschreibung von Ausführungsbeispielen der Erfindung anhand der Figuren der Zeichnung, wobei gleiche Bezugszeichen auf gleich wirkende Bauteile verweisen und wobei
- Figur 1: ein erstes Ausführungsbeispiel einer Vorrichtung gemäß der vorliegenden Erfindung, die sich in einer Normalbetriebsstellung befindet,
- Figur 2: die Vorrichtung gemäß Figur 1 in einer Erdungsstellung und
- Figur 3: mehrere erfindungsgemäße Ausführungsbeispiele der Kontaktgabe zwischen dem Erdungsabschnitt und den elektrischen Bauteilen zeigen.

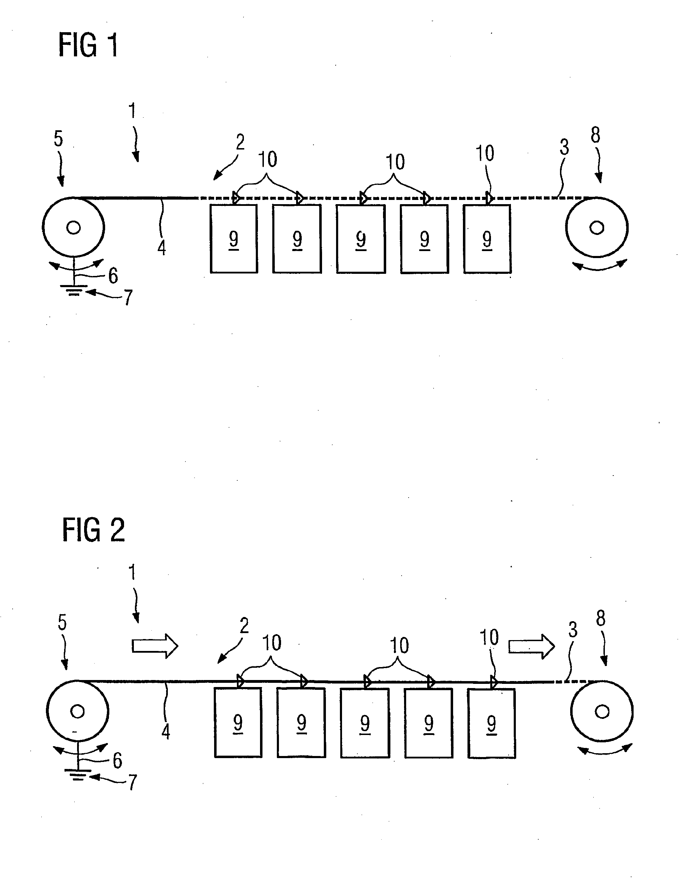

Figur 1 zeigt ein Ausführungsbeispiel der erfindungsgemäßen Vorrichtung 1, die ein als Seil ausgestaltetes Bewegteil 2 aufweist, welches aus einem Isolierabschnitt 3 sowie einem metallisch leitenden Erdungsabschnitt 4 besteht. Aufgrund der Seilform ist das Bewegteil 2 mit seinen beiden Abschnitten flexibel und wickelbar. Die Vorrichtung 1 verfügt daher über eine erste Wicklung 5, die über eine Erdungsleitung 6 mit einem Erdungspunkt 7 sowie mit dem Erdungsabschnitt mechanisch und elektrisch verbunden ist. Der Erdungspunkt 7 ist hier als in der Erde versenkte Erdungselektrode ausgebildet. Darüber hinaus ist eine zweite Wicklung 8 vorgesehen, die von Hand beziehungsweise von einem nicht dargestellten Wicklungsantrieb betätigbar ist und die mit dem Isolierabschnitt verbunden ist. Zum Antrieb der zweiten Wicklung 5 ist ebenfalls ein Elektromotor vorgesehen.

Zwischen der ersten Wicklung 5 und der zweiten Wicklung 8 sind Gehäuse 9 von Submodulen als elektrische Bauteile eines Stromrichters in einer Reihe angeordnet, wobei die Submodule miteinander elektrisch in Reihe zu einem Phasenmodulzweig verschaltet sind. Dabei erstreckt sich der Phasenmodulzweig zwischen einem in Figur 1 figürlich nicht dargestellten Gleichspannungsanschluss und einem ebenfalls nicht dargestellten Wechselspannungsanschluss des Stromrichters. Im Rahmen der Erfindung sind insgesamt sechs dieser Phasenmodulzweige vorgesehen, wobei eine so genannte Sechs-Puls-Brücke zum Anschluss an ein dreiphasiges Wechselspannungsnetz ausgebildet ist. Solche Sechs-Puls-Brücken sind dem Fachmann im Bereich der Energieübertragung und -Verteilung bestens bekannt, so dass an dieser Stelle auf den genauen Aufbau und die Regelung solcher Stromrichter nicht detailliert eingegangen wird. Es sei lediglich erwähnt, dass ein solcher Stromrichter beispielsweise zur Hochspannungsgleichstromübertragung eingesetzt wird. Die besagten Phasenmodülzweige können jedoch auch als schnelle Schalter in Wechselspannungsnetzen eingesetzt werden, wobei sie beispielsweise zur Blindleistungskompensation dienen. Anwendungen dieser Art sind auch unter dem Begriff "Flexible AC Transmission Systems" oder kurz FACTS bekannt geworden.

Die in den Gehäusen 9 angeordneten Komponenten, insbesondere Leistungshalbleiter, befinden sich im Normalbetrieb auf einem Hochspannungspotenzial beispielsweise auf etwa 200 Kilovolt. In der in Figur 1 gezeigten Stellung befindet sich die Vorrichtung 1 in ihrer Betriebsstellung, in welcher der gestrichelt dargestellte Isolierabschnitt 3 oberhalb der Gehäuse 9 angeordnet ist. In dieser Stellung sind die Gehäuse 9 nicht geerdet.

Figur 2 zeigt die Vorrichtung 1 gemäß Figur 1 in einer Stellung, in der die Gehäuse 9 mit dem Potenzialpunkt 7 leitend verbunden sind. Zum Erden der Gehäuse 9 wird die zweite Wicklung 8 im Uhrzeigersinn von dem nicht dargestellten Elektroantrieb verdreht, wobei das Bewegteil 2 in Pfeilrichtung so bewegt wird, dass sich der Erdungsabschnitt oberhalb der Gehäuse 9 befindet. Zum Kontaktieren des Erdungsabschnittes 4 sind an den Gehäusen 9 angebrachte Schleifkontakt 10 vorgesehen. Die Schleifkontakte 9 weisen beispielsweise zweckmäßige Federelemente auf, die für eine sichere Kontaktgabe zwischen dem Erdungsabschnitt 4 und dem Gehäuse 9 sorgen. Abweichend von dem in Figur 2 gezeigten Ausführungsbeispiel können die Schleifkontakte 10 jedoch auch an dem Erdungsabschnitt 4 befestigt sein.

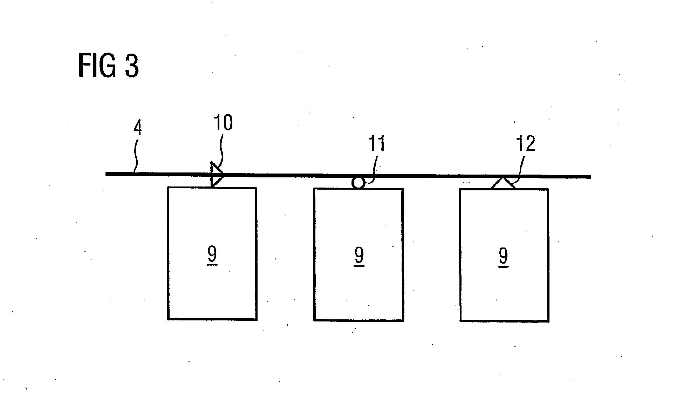

Figur 3 zeigt mehrere Beispiele der Kontaktgabe zwischen dem Erdungsabschnitt 4 und den Gehäusen 9. In der rechten Darstellung der Figur 3 ist, wie in den Figuren 1 und 2, ein Schleifkontakt 10 verdeutlicht, dessen Funktionsweise bereits weiter oben beschrieben wurde. Das in Figur 3 in der Mitte liegende Gehäuse ist mittels eines Rollenkontaktes 11 mit dem Erdungsabschnitt 4 verbunden, wobei beispielsweise ein zweckmäßiger Bügel oder eine in einer Rolle eingebrachte Nut zum Führen des seilförmigen Erdungsabschnittes vorgesehen ist. Das in Figur 3 rechte Gehäuse 9 weist eine vom Dachbereich des Gehäuses 9 aufragende Kontaktierungswölbung 12 auf, auf der der Erdungsabschnitt 4 in Folge seines Eigengewichtes aufliegt. Eine solche Kontaktierung ist hinsichtlich der Kosten vorteilhaft.

## Patentansprüche

1. Vorrichtung (1) zum Erden von in einer Reihe hintereinander aufgestellten elektrischen Bauteilen (9) mit einem auf Erdpotenzial liegenden Erdungspunkt (7) und einem mit dem Erdungspunkt (7) verbundenen Betätigungsmittel zum Verbinden der elektrischen Bauteile (9) mit dem Erdungspunkt (7), wobei
das Betätigungsmittel als ein sich in eine Längsrichtung erstreckendes und in Längsrichtung bewegliches Bewegteil (2) ausgebildet ist, wobei das Bewegteil (2) einen mit dem Erdungspunkt (7) verbundenen elektrisch leitenden Erdungsabschnitt (4) und einen elektrisch nicht leitenden Isolierabschnitt (3) aufweist, der an dem vom Erdungspunkt (7) abgewandten Ende des Bewegteils (2) angeordnet ist, wobei zum Erden der Bauteile (9) eine elektrische Verbindung zwischen dem Erdungsabschnitt (4) und den Bauteilen (9) durch Bewegung des Bewegteils (2) herstellbar ist,
**dadurch gekennzeichnet, dass** in einer Betriebsstellung der Vorrichtung (1) der Isolierabschnitt (3) an den Bauteilen (9) anliegt, so dass die Bauteile (9) nicht geerdet sind.

2. Vorrichtung (1) nach Anspruch 1,
**dadurch gekennzeichnet, dass** das Bewegteil (2) ein flexibler und wickelbarer Bewegungsstrang (2) ist.

3. Vorrichtung (1) nach Anspruch 2,
**dadurch gekennzeichnet, dass** der Bewegungsstrang (2) als Seil ausgestaltet ist.

4. Vorrichtung (1) nach Anspruch 2,
**dadurch gekennzeichnet, dass** der Bewegungsstrang (2) als Kette ausgestaltet ist.

5. Vorrichtung (1) nach einem der Ansprüche 2 bis 4,
**gekennzeichnet durch**
eine erste Wicklung (5) zum Tragen des Bewegungsstranges (2).

6. Vorrichtung (1) nach Anspruch 5,
**gekennzeichnet durch**
eine zweite Wicklung (8), die an einer von der ersten Wicklung (5) abgewandten Seite der elektrischen Bauteile (9) aufstellbar ist.

7. Vorrichtung (1) nach einem der vorhergehenden Ansprüche,
**dadurch gekennzeichnet, dass** die elektrischen Bauteile (9) Schleifkontakte (10) aufweisen.

8. Vorrichtung (1) nach einem der Ansprüche 1 bis 5,
**dadurch gekennzeichnet, dass** die elektrischen Bauteile (9) Rollenkontakte (11) aufweisen.

9. Stromrichter zum Umrichten eines elektrischen Stromes mit Phasenmodulen, die wenigstens einen Gleichspannungsanschluss und einen Wechselspannungsanschluss aufweisen, wobei zwischen jedem Gleichspannungsanschluss und dem Wechselspannungsanschluss Phasenmodulzweige ausgebildet sind, die eine Reihenschaltung von Submodulen aufweisen, wobei jedes Submodul über ein Gehäuse als elektrisches Bauteil (9) verfügt, in dem wenigstens ein Leistungshalbleiter angeordnet ist,
**gekennzeichnet durch**
eine Vorrichtung zum Erden der Gehäuse (9) oder sonstiger elektrischer Bauteile gemäß einem der vorhergehenden Ansprüche.

## Claims

1. Apparatus (1) for grounding of electrical parts (9) which are installed one behind the other in a row, having a grounding point (7) which is at ground potential and having an operating means, which is connected to the grounding point (7), for connection of the electrical parts (9) to the grounding point (7), the operating means being in the form of a moving part (2) which extends in a longitudinal direction and moves in a longitudinal direction, the moving part (2) having an electrically conductive grounding section (4), which is connected to the grounding point (7), and an electrically nonconductive insulating section (3) which is arranged at the end of the moving part (2) which is remote from the grounding point (7), wherein, for grounding the parts (9), an electrical connection between the grounding section (4) and the parts (9) can be produced by movement of the moving part (2),
**characterized in that**
in an operating position of the apparatus (1) the insulating section (3) rests on the parts (9), such that the parts (9) are not grounded.

2. Apparatus (1) according to Claim 1, **characterized in that** the moving part (2) is a flexible movement strand (2) which can be wound.

3. Apparatus (1) according to Claim 2, **characterized in that** the movement strand (2) is in the form of a cable.

4. Apparatus (1) according to Claim 2, **characterized in that** the movement strand (2) is in the form of a chain.

5. Apparatus (1) according to one of Claims 2 to 4,
**characterized by**
a first winding (5) for supporting the movement strand (2).

6. Apparatus (1) according to Claim 5,
**characterized by**
a second winding (8) which can be installed on a side of the electrical parts (9) which is remote from the first winding (5) .

7. Apparatus (1) according to one of the preceding claims, **characterized in that** the electrical parts (9) have sliding contacts (10).

8. Apparatus (1) according to one of Claims 1 to 5, **characterized in that** the electrical parts (9) have roller contacts (11).

9. Converter for conversion of an electric current having phase modules which have at least one DC voltage connection and one AC voltage connection, with phase module branches being formed between each DC voltage connection and the AC voltage connection and having sub-modules connected in series, with each sub-module having a housing as an electrical part (9), in which at least one power semiconductor is arranged,
**characterized by**
an apparatus for grounding the housings (9) or other electrical parts according to one of the preceding claims.

## Revendications

1. Dispositif ( 1 ) de mise à la terre de composants ( 9 ) électriques mis les uns derrière les autres dans une rangée, comprenant un point ( 7 ) de mise à la terre, se trouvant au potentiel de terre, et un moyen d'actionnement, qui est relié au point ( 7 ) de mise à la terre et qui est destiné à relier les composants ( 9 ) électriques au point ( 7 ) de mise à la terre, dans lequel
le moyen d'actionnement est constitué sous la forme d'une partie ( 2 ) déplacée s'étendant dans la direction longitudinale et mobile dans la direction longitudinale, la partie ( 2 ) déplacée ayant un tronçon ( 4 ) conducteur électriquement de mise à la terre, qui est relié au point ( 7 ) de mise à la terre, et un tronçon ( 3 ) isolant, qui ne conduit pas l'électricité et qui est disposé à l'extrémité de la partie ( 2 ) en mouvement, éloignée du point ( 7 ) de mise à la terre, dans lequel, pour la mise à la terre des composants ( 9 ), une liaison électrique peut être ménagée entre le tronçon ( 4 ) de mise à la terre et les composants ( 9 ) en déplaçant la partie ( 2 ) déplacée,
**caractérisé en ce que**
dans une position de fonctionnement du dispositif ( 1 ), le tronçon ( 3 ) isolant s'applique aux composants ( 9 ), de manière à ce que les composants ( 9 ) ne soient pas mis à la terre.

2. Dispositif ( 1 ) suivant la revendication 1,
**caractérisé en ce que**
la partie ( 2 ) déplacée est un cordon ( 2 ) de déplacement souple et enroulable.

3. Dispositif ( 1 ) suivant la revendication 2,
**caractérisé en ce que**
le cordon ( 2 ) de déplacement est conformé en câble.

4. Dispositif ( 1 ) suivant la revendication 2,
**caractérisé en ce que**
le cordon ( 2 ) de déplacement est conformé en chaîne.

5. Dispositif ( 1 ) suivant l'une des revendications 2 à 4,
**caractérisé par**
un premier enroulement ( 5 ) pour porter le cordon ( 2 ) de déplacement.

6. Dispositif ( 1 ) suivant la revendication 5,
**caractérisé par**
un deuxième enroulement ( 8 ), qui peut être mis du côté des composants ( 9 ) électriques, éloigné du premier enroulement ( 5 ).

7. Dispositif ( 1 ) suivant l'une des revendications précédentes,
**caractérisé en ce que**
les composants ( 9 ) électriques ont des contacts ( 10 ) par frottement.

8. Dispositif ( 1 ) suivant l'une des revendications 1 à 5,
**caractérisé en ce que**
les composants ( 9 ) électriques ont des contacts ( 11 ) par galets.

9. Convertisseur de courant pour transformer un courant électrique ayant des modules de phase, qui ont au moins une borne de tension continue et une borne de tension alternative, dans lequel, entre chaque borne de tension continue et la borne de tension alternative, sont constituées des branches de modules de phase, qui ont un circuit série de sous-modules, chaque sous-module disposant d'un boîtier comme composant ( 9 ) électrique, dans lequel est disposé au moins un semiconducteur de puissance,
**caractérisé par**
un dispositif de mise à la terre du boîtier ( 9 ) ou d'autres composants électriques suivant l'une des revendications précédentes.
